# EUROPÄISCHE PATENTSCHRIFT

(11) **EP 2 827 023 B1**
(45) Veröffentlichungstag und Bekanntmachung des Hinweises auf die Patenterteilung: **09.09.2015**
(21) Anmeldenummer: 13177298.0
(22) Anmeldetag: 19.07.2013
(51) Int. Cl.: F16H 57/023, B23P 15/14

(54) **Verfahren zum Fügen eines schrägverzahnten ersten Zahnrades und eines zweiten schrägverzahnten Zahnrades zu einem Getriebe**
Method for joining a helical first cogged wheel and a second helical cogged wheel to a transmission
Procédé d'assemblage d'une première roue dentée à denture oblique et d'une deuxième roue dentée à denture oblique pour former un engrenage

(43) Veröffentlichungstag der Anmeldung: 21.01.2015
(73) Patentinhaber: IMS Gear GmbH, 78166 Donaueschingen (DE)
(72) Erfinder: Broghammer, Marcel, 78144 Schramberg (DE); Obergföll, Martin, 78166 Donaueschingen (DE)
(74) Vertreter: Westphal, Mussgnug & Partner Patentanwälte mbB

(56) Entgegenhaltungen:
- EP-A1- 0 769 839
- DE-A1- 10 029 218
- DE-B3-102004 054 716
- JP-A- H0 949 552

## Beschreibung

Die Erfindung betrifft ein Verfahren zum Fügen eines schrägverzahnten ersten Zahnrades und eines zweiten schrägverzahnten Zahnrades zu einem Getriebe gemäß Oberbegriff des Patentanspruchs 1. Ferner betrifft die Erfindung eine Fügeeinrichtung zur Durchführung des erfindungsgemäßen Verfahrens.

Zum Fügen eines schrägverzahnten Schneckenrades und einer Schnecke zu einem Schneckengetriebe ist es bekannt, hierzu eine so genannte Fügeeinrichtung mit einer pneumatischen Achse zu verwenden. Zum Fügen wird das Schneckenrad mittels dieser Fügeeinrichtung so positioniert, dass die Fügeachse und das Schneckenrad koaxial zueinander ausgerichtet sind. Das Schneckenrad wird anschließend axial auf die Schnecke bis auf Kontakt mit derselben zugefahren. Wenn in dieser Lage des Schneckenrades eine Verzahnung mit der Schnecke nicht möglich ist, d.h. die Verzahnungen nicht in einer einen Verzahnungseingriff ermöglichenden Lage sich befinden, wird mithilfe von die Rotation einstellenden Querzylindern der pneumatischen Achse das Schneckenrad so lange gedreht, bis sich die Verzahnung in die richtige Montageposition gedreht hat und dadurch die Verzahnungen des Schneckenrades und der Schnecke ineinander einrasten können. Bei diesem Vorgang ist jedoch ein Verkanten des Schneckenrades mit der Folge einer Beschädigung der beteiligten Bauteile nicht auszuschließen. Insbesondere bei Verwendung eines gesinterten Schneckenrades anstelle eines aus Stahl hergestellten Schneckenrades besteht eine erhöhte Gefahr der Beschädigung, da durch den Sinterprozess fertigungsbedingt scharfe Kanten an den Fügestellen der Schneckenrades entstehen.

JP 09 049 552 offenbart ein Verfahren zum Fügen eines Schneckenrades und einer Schnecke zu einem Schneckengetriebe. Aus DE 10 2004 054 716 B und DE 100 29 218 A sind Vorrichtungen zur Montage von Getrieben bekannt.

Ausgehend von diesem Stand der Technik ist es Aufgabe der Erfindung ein Verfahren der eingangs genannten Art zu schaffen, bei welchem die oben genannten Nachteile vermieden werden, insbesondere ein Verkanten des zu fügenden Schneckenrades verhindert wird. Ferner ist es Aufgabe der Erfindung, eine Fügeeinrichtung zur Durchführung des erfindungsgemäßen Verfahrens anzugeben. Dabei soll die Erfindung nicht auf das Fügen eines Schneckenrades und einer Schnecke begrenzt sein. Vielmehr soll das Fügen auch für eine Paarung von schrägverzahnten Zahnrädern und insbesondere Schrägstirnrädern geeignet sein.

Die erstgenannte Aufgabe wird gelöst durch ein Verfahren mit den Merkmalen des Patentanspruchs 1.

Ein solches Verfahren zum Fügen eines ersten schrägverzahnten Zahnrades, insbesondere eines Schneckenrades und eines auf einer Achse dieses ersten Zahnrades angeordneten zweiten schrägverzahnten Zahnrades, insbesondere einer Schnecke, zu einem Getriebe, insbesondere einem Schneckengetriebe, bei welchem mittels einer Fügeeinrichtung das erste Zahnrad koaxial zu einer in einer 90°-Position gegenüber der Achse stehenden Fügeachse des ersten Zahnrades positioniert wird, zeichnet sich erfindungsgemäß dadurch aus, dass
a) mittels der Fügeeinrichtung das erste Zahnrad in axialer Fügerichtung bis zur Anlage an dem zweiten Zahnrad bewegt wird,
b) bei fehlender Verzahnung zwischen dem ersten Zahnrad und dem zweiten Zahnrad das zweite Zahnrad mittels der Fügeeinrichtung entgegen der Fügerichtung von dem zweiten Zahnrad abgehoben und das erste Zahnrad um einen vorgegebenen Drehwinkel um dessen Achse gedreht wird,
c) Verfahrensschritte a) und b) so oft wiederholt werden, bis das erste Zahnrad in Verzahnung mit dem zweiten Zahnrad bringbar ist, und
d) mittels der Fügeeinrichtung das erste Zahnrad unter Ausführung einer axialen Bewegung in Fügerichtung und einer durch die Schrägverzahnung des ersten Zahnrades bewirkten Ausgleichsdrehbewegung mit dem zweiten Zahnrad vollständig verzahnt wird.

Durch das Zurückfahren in axialer Fügerichtung des Schneckenrades bei nicht passender Verzahnungslage der in Eingriff zu bringenden Verzahnungen des Schneckenrades und der Schnecke und das anschließende Verdrehen des Schneckenrades um einen vorgegebenen Drehwinkel (Verfahrensschritt b) wird ein Verkanten des zu fügenden Schneckenrades funktionssicher verhindert. Erst wenn das Schneckenrad eine Position aufweist, in der die Verzahnungen des Schneckenrades und der Schnecke eine Verzahnung zulassen, wird das Schneckenrad mit der Schnecke vollständig gefügt, also das Schneckenrad in Verzahnungseingriff mit der Schnecke gebracht.

Nach einer vorteilhaften Ausgestaltung der Erfindung ist der vorgegebene Drehwinkel gemäß Verfahrensschritt b) kleiner als das dem Bogenmaß der Teilung des Schneckenrades entsprechende Gradmaß. Damit wird sichergestellt, dass nach Wiederholung des Verfahrensschrittes b) sich die relative Lage der Zähne der Verzahnung des Schneckenrades und der Verzahnung der Schnecke verändert hat.

Die zweitgenannte Aufgabe wird gelöst durch eine Fügeeinrichtung mit den Merkmalen des Patentanspruchs 3.

Eine solche Fügeeinrichtung zum Fügen eines schrägverzahnten Schneckenrades und einer auf einer Schneckenachse angeordneten Schnecke zu einem Schneckengetriebe, wobei das Schneckenrad koaxial zu einer in einer 90°-Position gegenüber der Schneckenachse stehenden Fügeachse des Schneckenrades mittels der Fügeeinrichtung positioniert ist, zeichnet sich erfindungsgemäß dadurch aus, dass
- die Fügeeinrichtung eine Ausgleichseinheit und eine Bewegungseinheit umfasst,
- die Ausgleichseinheit drehfest mit der Bewegungseinheit verbunden ist,
- die Bewegungseinheit ausgebildet ist das Schneckenrad axial und rotatorisch zu bewegen, und
- die Ausgleichseinheit ausgebildet ist das Schneckenrad unabhängig von der Bewegungseinheit mit einer Ausgleichsdrehbewegung und einer axialen Ausgleichsbewegung zu bewegen.

Mit dieser erfindungsgemäßen Fügeeinrichtung werden unterschiedliche Abläufe des Fügens des Schneckenrades mit der Schnecke von verschiedenen Komponenten der Fügeeinrichtung ausgeführt. So werden die Verfahrensschritte a) und b), die das axiale Verschieben des Schneckenrades in Fügerichtung sowie gegebenenfalls dessen Verdrehen um den vorgegebenen Drehwinkel betreffend von der Bewegungseinheit durchgeführt, während bei richtiger Lage der Verzahnungen des Schneckenrades der Schnecke die axiale und rotatorische Bewegung zum vollständigen Fügen von der Ausgleichseinheit bewirkt wird.

In vorteilhafter Weise ist daher weiterbildungsgemäß vorgesehen, dass bei einer in einen Verzahnungseingriff mit der Schnecke bringbare Position des Schneckenrades, insbesondere eine mit Verfahrensschritt c) erreichte Position, die Ausgleicheinheit ausgebildet ist die Ausgleichsdrehbewegung und die axiale Ausgleichsbewegung zum vollständigen Verzahnen des Schneckenrades mit der Schnecke auszuführen.

Ferner umfasst nach einer weiteren vorteilhaften Ausgestaltung die Ausgleichseinheit ein Greifmodul mit Greiferfinger zur Aufnahme des Schneckenrades.

Schließlich umfasst weiterbildungsgemäß die Ausgleichseinheit einen Anschraubflansch zur drehfesten Verbindung mit der Bewegungseinheit.

Die Erfindung wird nachfolgend anhand eines Ausführungsbeispiels unter Bezugnahme auf die beigefügten Figuren ausführlich beschrieben. Es zeigen:
- Figur 1: eine schematische Schnittdarstellung einer Fügeeinrichtung zur Durchführung des erfindungsgemäßen Verfahrens,
- Figur 2: eine schematische Darstellung eines Verfahrensschrittes des Fügens eines Schneckenrades mit einer Schnecke mittels der Fügeeinrichtung nach Figur 1,
- Figur 3: eine schematische Darstellung eines weiteren Verfahrensschrittes im Anschluss an den Verfahrensschritt nach Figur 2,
- Figur 4: eine schematische Darstellung eines weiteren Verfahrensschrittes im Anschluss an den Verfahrensschritt nach Figur 3,
- Figur 5: eine schematische Darstellung eines weiteren Verfahrensschrittes im Anschluss an den Verfahrensschritt nach Figur 4, und
- Figur 6: eine schematische Darstellung eines letzten, das vollständige Fügen des Schneckenrades mit der Schnecke bewirkenden Verfahrensschrittes.

Obwohl in dem nachfolgenden Ausführungsbeispiel immer davon die Rede ist, dass eine Schnecke und ein Schneckenrad zueinander gefügt werden, ist die vorliegende Erfindung hierauf nicht beschränkt. Vielmehr können schrägverzahnte Zahnräder, insbesondere Stirnzahnräder mit Schrägverzahnung, in ähnlicher Weise, wie es nachfolgend für eine Schnecke und ein Schneckenrad beschrieben ist, miteinander gefügt werden.

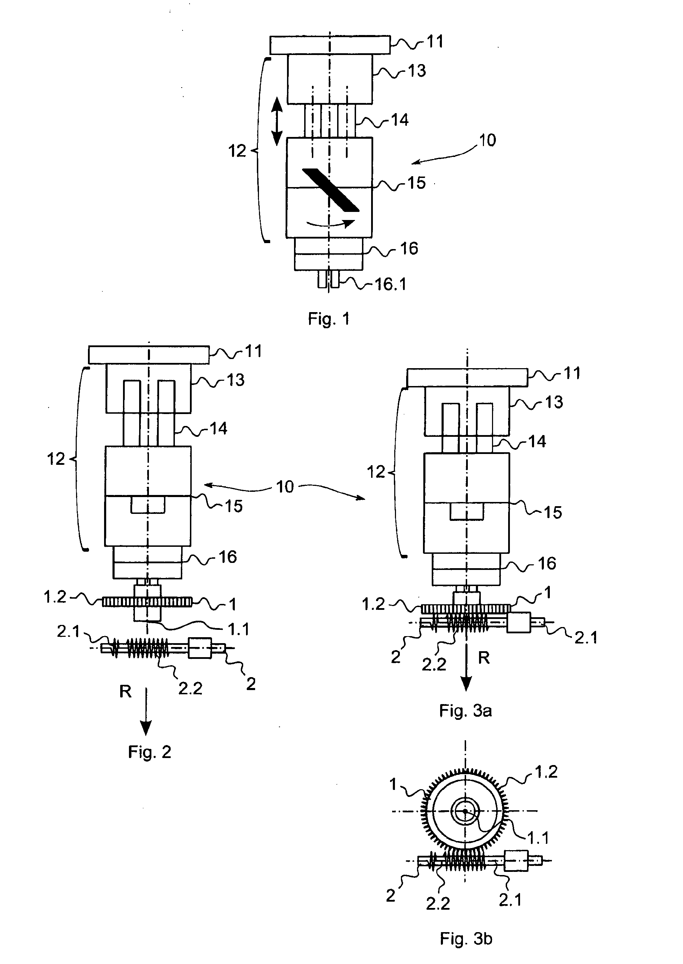

Der Vorgang des Fügens eines Schneckenrades 1 und einer Schnecke 2 zu einem Schneckengetriebe 3 mittels einer Fügeeinrichtung 10 wird anhand der Figuren 2 bis 6 beschrieben und erläutert. Daher wird zunächst diese in Figur 1 dargestellte Fügeeinrichtung 10 beschrieben.

Diese Fügeeinrichtung 10 umfasst eine Bewegungseinheit 11 und einem mit dieser verbundene Ausgleichseinheit 12. Diese Ausgleichseinheit 12 ist mit einem Ende über einen Anschraubflansch 13 drehfest mit der Bewegungseinheit 11 gekoppelt und weist am gegenüberliegenden Ende Greiferfinger 16.1 zur Aufnahme des Schneckenrades 1 auf.

Die Bewegungseinheit 11 dient dazu, die das Schneckenrad 1 aufnehmende Ausgleichseinheit 12 sowohl in axialer Richtung, d.h. im axialer Fügerichtung R in Bezug auf das zu fügende Schneckengetriebe 3 (vgl. Figur 3) zu bewegen als auch unabhängig von der Bewegung in axialer Richtung eine Rotationsbewegung in Bezug auf diese axiale Fügerichtung R auszuführen.

Die Ausgleichseinheit 12 umfasst neben dem Anschraubflansch 13 eine Komponente 14 für einen axialen Ausgleich sowie eine Komponente 15 für einen rotatorischen Ausgleich auf. Hierzu besteht die Komponente 14 aus elastischen Bauteilen, welche einen flexiblen axialen Hub ermöglichen. Die Komponente 15 für einen rotatorischen Ausgleich ist ebenso mittels elastischen Bauteilen realisiert, so dass unabhängig von dem axialen Ausgleich mittels der Komponente 14 ein rotatorischer Ausgleich ermöglicht wird.

Schließlich weist diese Ausgleichseinheit 12 auch ein Greifmodul 16 auf, welches mittels den bereits erwähnten Greiferfingern 16.1 das zu fügende Schneckenrad 1 aufnimmt.
Der Fügeprozess des Fügens eines Schneckenrades 1 und einer zugehörigen Schnecke 2 zu einem Schneckengetriebe 3 beginnt damit, dass die Bewegungseinheit 11 der Fügeeinrichtung 10 die das Schneckenrad 1 aufgenommene Ausgleichseinheit 12 entsprechend Figur 2 derart positioniert, dass das Schneckenrad 1 und dessen Fügeachse 1.1 koaxial zueinander ausgerichtet sind.

In einem ersten Verfahrensschritt (Verfahrensschritt a) wird die Ausgleichseinheit 12 mittels der Bewegungseinheit 11 in axialer Fügerichtung R bewegt, bis das Schneckenrad 1 an der Schnecke 2 anliegt. Diese Situation zeigt Figur 3a) in einer Seitenansicht auf die Anordnung aus Schneckenrad 1 und Schnecke 2 sowie Figur 3b) in einer Draufsicht auf diese Anordnung. Insbesondere aus dieser Figur 3b) ist zu erkennen, dass die Zähne der Verzahnungen 1.2 und 2.2 des Schneckenrades 1 bzw. der Schnecke 2 nicht auf Lücke sondern direkt gegenüberstehen, so dass ein Verzahnungseingriff des Schneckenrades 1 in die Schnecke 2 aus dieser Position des Schneckenrades 1 nicht möglich ist.

Wenn der Verzahnungseingriff nicht möglich ist, verhindert der axiale Ausgleich ein Beschädigen des Schneckenrads bzw. der Schnecke.

Das Betätigen des axialen Ausgleichs wird über ein Sensor erkannt.

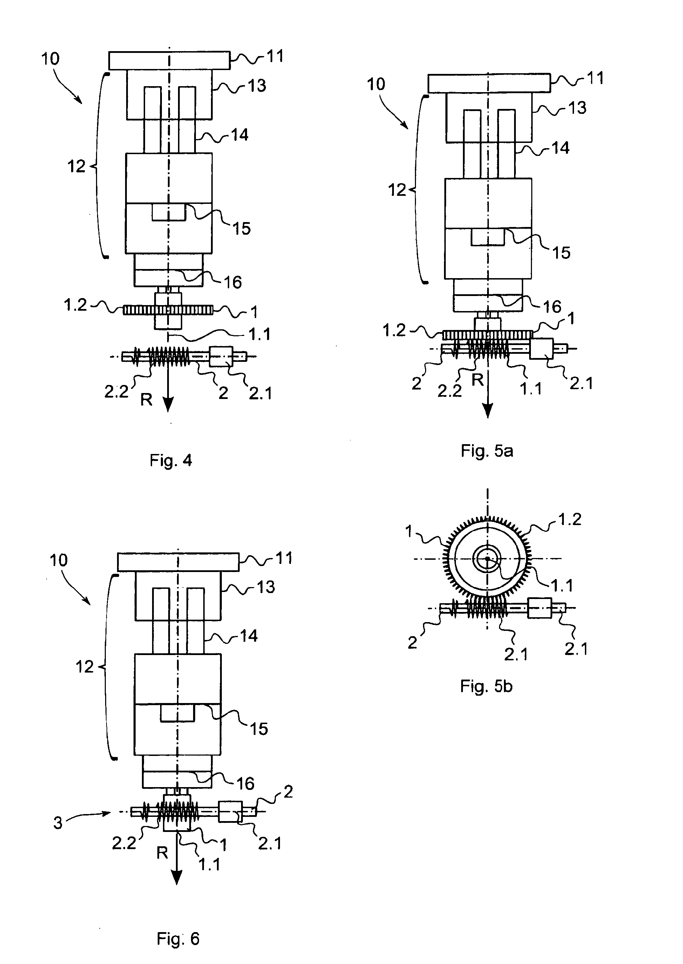

In einem sich daran anschließenden zweiten Verfahrensschritt (Verfahrensschritt b) wird die Ausgleichseinheit 12 mittels der Bewegungseinheit 11 entgegen der Fügerichtung R von der Schnecke 2 abgehoben und anschließend das Schneckenrad 1 um einen vorgegebenen Drehwinkel um dessen Schneckenradachse gedreht (vgl. Figur 4). Dieser Drehwinkel beträgt nur wenige Winkelgrade und ist kleiner als das dem Bogenmaß der Teilung des Schneckenrades 1 entsprechende Gradmaß. Damit wird sichergestellt dass dieser Drehwinkel kleiner ist die Teilung p der Verzahnung 1.2 des Schneckenrades 1 und damit sichergestellt, dass nach dieser Drehung des Schneckenrades 1 eine veränderte relative Position zwischen den Zähnen der Verzahnungen 1.2 und 2.2 des Schneckenrades 1 bzw. der Schnecke 2 zustande kommt.

Nun wird der erste Verfahrensschritt (Verfahrensschritt a) gemäß Figur 2 wiederholt, also die Ausgleichseinheit 12 mittels der Bewegungseinheit 11 wieder in axialer Fügerichtung R auf die Schnecke 2 zubewegt, bis das Schneckenrad 1 wieder an der Schnecke 2 anliegt, wie dies in Figur 5 dargestellt ist. Figur 5a) zeigt eine Seitenansicht auf die Fügeeinrichtung 10 und die Schnecke 2, während Figur 5b) eine Draufsicht auf diese Anordnung zeigt. Insbesondere aus dieser Draufsicht nach Figur 5b) ist zu erkennen, dass die Zähne der Verzahnungen 1.2 und 2.2 des Schneckenrades 1 bzw. der Schnecke 2 nunmehr auf Zahnlücke stehen, d.h. das Schneckenrad 1 kann nunmehr mit der Schnecke 2 verzahnt werden.

Falls jedoch nach diesem wiederholten ersten Verfahrensschritt die Zähne der Verzahnungen 1.2 und 2.2 des Schneckenrades 1 bzw. der Schnecke 2 immer noch nicht auf Zahnlücke stehen, wird erneut der zweite Verfahrensschritt (Verfahrensschritt b) ausgeführt, also die Ausgleichseinheit 12 mittels der Bewegungseinheit 11 wieder zurückgefahren und erneut eine vorgegebene Drehbewegung des Schneckenrades 1 ausgeführt und erneut der erste Verfahrensschritt durchgeführt.

Der erste und zweite Verfahrensschritt wird als so oft wiederholt (Verfahrensschritt c), bis die Zähne der Verzahnungen 1.2 und 2.2 des Schneckenrades 1 bzw. der Schnecke 2 auf Lücke stehen.

Ist dieser Zustand hinsichtlich der Stellungen der Verzahnungen des Schneckenrades 1 und der Schnecke 2 erreicht, wird in einem letzten Verfahrensschritt (Verfahrensschritt d) das vollständige Fügen des Schneckenrades 1 und der Schnecke 2 durchgeführt. Hierzu wird gemäß Figur 6 die Verzahnung 1.2 des Schneckenrades 1 vollständig in Eingriff mit der Verzahnung 2.2 der Schnecke 2 gebracht, indem eine rotatorischen Ausgleichsbewegung um die Fügeachse 1.1 des Schneckenrades 1 von dem Schneckenrad 1 ausgeführt wird. Hierzu wird die Komponente 15 der Ausgleichseinheit 12 für einen rotatorischen Ausgleich aktiviert. Diese Komponenten 14 und 15 erlauben die axiale Ausgleichsbewegung und die rotatorisch Ausgleichsbewegung des Schneckenrades 1, die aufgrund der schrägverzahnten Geometrie sowohl des Schneckenrades 1 als auch der Schnecke 2 für den vollständigen Verzahnungseingriff erforderlich ist.

Nach Figur 6 sind das Schneckenrad 1 und die Schnecke 2 derart zueinander positioniert, dass sie das zu fügende Schneckengetriebe 3 bilden.

Aufgrund der die Ausgleichsbewegungen erlaubenden elastischen Bauteile der Komponenten 14 und 15 der Ausgleichseinheit 12 können das Schneckenrad 1 und die Schnecke 2 schwimmend montiert werden, d.h. sie lassen nur eine Bewegung in der jeweilig gewünschten Richtung zu. Das Schneckenrad 1 ist sowohl in der axialen Fügerichtung R um die Fügeachse 1.1 flexibel und während des Fügeprozesses koaxial zur Fügeposition ausgerichtet.

### Bezugszeichenliste

- 1: erstes schrägverzahntes Zahnrad, insbesondere Schneckenrad
- 1.1: Fügeachse des Schneckenrades 1
- 2: zweites schrägverzahntes Zahnrad, insbesondere Schnecke
- 2.1: Achse der Schnecke 2
- 3: Zahnradgetriebe, insbesondere Schneckengetriebe

- 10: Fügeeinrichtung
- 11: Bewegungseinheit der Fügeeinrichtung 10
- 12: Ausgleichseinheit der Fügeeinrichtung 10
- 13: Anschraubflansch der Ausgleichseinheit 12
- 14: Komponente der Ausgleichseinheit 12 für einen axialen Ausgleich
- 15: Komponente der Ausgleichseinheit 12 für einen rotatorischen Ausgleich
- 16: Greifmodul
- 16.1: Greiferfinger

## Patentansprüche

1. Verfahren zum Fügen eines schrägverzahnten ersten Zahnrades, insbesondere eines Schneckenrades (1) und eines auf einer Achse (2.1) angeordneten zweiten Zahnrads, insbesondere einer Schnecke (2) zu einem Getriebe, insbesondere einem Schneckengetriebe (3), bei welchem mittels einer Fügeeinrichtung (10) das erste Zahnrad (1) koaxial zu einer in einer 90°-Position gegenüber der Achse (2.1) stehenden Fügeachse (1.1) des ersten Zahnrades (1) positioniert wird,
**dadurch gekennzeichnet, dass**
a) mittels der Fügeeinrichtung (10) das erste Zahnrad (1) in axialer Fügerichtung (R) bis zur Anlage an dem zweiten Zahnrad (2) bewegt wird,
b) bei fehlender Verzahnung zwischen dem ersten Zahnrad (1) und dem zweiten Zahnrad (2) das erste Zahnrad (1) mittels der Fügeeinrichtung (10) entgegen der Fügerichtung (R) von dem zweiten Zahnrad (2) abgehoben und das erste Zahnrad (1) um einen vorgegebenen Drehwinkel um dessen eigene Achse gedreht wird,
c) Verfahrensschritte a) und b) so oft wiederholt werden, bis das erste Zahnrad (1) in die Verzahnung mit dem zweiten Zahnrad (2) bringbar ist, und
d) mittels der Fügeeinrichtung (10) das erste Zahnrad (1) unter Ausführung einer axialen Ausgleichsbewegung in Fügerichtung (R) und einer durch die Schrägverzahnung des ersten Zahnrades (1) bewirkten Ausgleichsdrehbewegung mit dem zweiten Zahnrad (2) vollständig verzahnt wird.

2. Verfahren nach Anspruch 1,
**dadurch gekennzeichnet, dass** der vorgegebene Drehwinkel gemäß Verfahrensschritt b) kleiner ist als das dem Bogenmaß der Teilung des ersten Zahnrad (1) entsprechende Gradmaß.

3. Fügeeinrichtung (10) zum Fügen eines schrägverzahnten Schneckenrades (1) und einer auf einer Schneckenachse (2.1) angeordneten Schnecke (2) zu einem Schneckengetriebe, wobei das Schneckenrad (1) koaxial zu einer in einer 90°-Position gegenüber der Schneckenachse (2.1) stehenden Fügeachse (1.1) des Schneckenrades (1) mittels der Fügeeinrichtung (10) positioniert ist, insbesondere zur Durchführung des Verfahrens nach einem der vorhergehenden
Ansprüche, wobei
- die Fügeeinrichtung (10) eine Bewegungseinheit (11) und eine Ausgleichseinheit (12)umfasst,
- die Ausgleichseinheit (12) drehfest mit der Bewegungseinheit (11) verbunden ist,
- die Bewegungseinheit (11) ausgebildet ist das Schneckenrad (1) axial und rotatorisch zu bewegen, und
- die Ausgleichseinheit (12) ausgebildet ist das Schneckenrad (1) unabhängig von der Bewegungseinheit (11) mit einer Ausgleichsdrehbewegung und einer axialen Ausgleichsbewegung zu bewegen.

4. Fügeeinrichtung (10) nach Anspruch 3,
**dadurch gekennzeichnet, dass** bei einer in einen Verzahnungseingriff mit der Schnecke (2) bringbare Position des Schneckenrades (1), insbesondere eine mit Verfahrensschritt c) erreichte Position, die Ausgleicheinheit (12) ausgebildet ist die Ausgleichsdrehbewegung und die axiale Ausgleichsbewegung zum vollständigen Verzahnen des Schneckenrades (1) mit der Schnecke (2) auszuführen.

5. Fügeeinrichtung (10) nach Anspruch 3 oder 4,
**dadurch gekennzeichnet, dass** die Ausgleichseinheit (12) ein Greifmodul (16) mit Greiferfinger (16.1) umfasst zur Aufnahme des Schneckenrades (1) umfasst.

6. Fügeeinrichtung (10) nach einem der Ansprüche 3 bis 5,
**dadurch gekennzeichnet, dass** die Ausgleichseinheit (12) einen Anschraubflansch (13) zur drehfesten Verbindung mit der Bewegungseinheit (11) umfasst.

7. Fügeeinrichtung (10) nach einem der Ansprüche 3 bis 6,
**dadurch gekennzeichnet, dass** das Schneckenrad durch ein erstes schrägverzahntes Zahnrad, insbesondere ein erstes Schrägstirnrad und die Schnecke durch ein zweites schrägverzahntes Zahnrad, insbesondere ein zweites Schrägstirnrad gesetzt ist.

## Claims

1. Method for assembling a helically geared first sprocket, particularly a worm wheel (1) and a second sprocket arranged on an axis (2.1), particularly a worm (2) in order to form a transmission, particularly a worm gear (3), wherein via an assembly device (10) the first sprocket (1) is positioned coaxially in reference to an axis of assembly (1.1) of the first sprocket (1), positioned at a 90°-position in reference to the axis (2.1), **characterized in that**
a) the first sprocket (1) is moved in the axial direction of assembly (R) via the assembly device (10) until contacting the second sprocket (2),
b) in the case of missing teeth between the first sprocket (1) and the second sprocket (2) the first sprocket (1) is lifted off the second sprocket (2) via the assembly device (10) opposite the direction of assembly (R) and the first sprocket (1) is rotated by a predetermined rotary angle around its own axis,
c) the processing steps a) and b) are repeated as many times as necessary until the first sprocket (1) can be brought into engagement with the second sprocket (2), and
d) the first sprocket (1) can be completely engaged with the second sprocket (2) via the assembly device (10) by way of executing an axial compensation motion in the direction of assembly (R) and by a compensating rotary motion caused by the helical teeth of the first sprocket (1).

2. Method according to claim 1, **characterized in that** the predetermined rotary angle according to the processing step b) is smaller than the degree allocated to the arc of the division of the first sprocket (1).

3. Assembly device (10) for assembling a helically geared worm gear (1) and a worm (2) arranged on a worm axis (2.1) in order to form a worm drive, with the worm gear (1) being positioned coaxially in reference to an axis of assembly (1.1) of the worm gear (1) aligned at a 90°-position in reference to the worm axis (2.1) via the assembly device (10), particularly to execute the method according to one of the above claims,
wherein
- the assembly device (10) comprises a motion unit (11) and a compensation unit (12),
- the compensation unit (12) is connected in a torque-proof fashion to the motion unit (11),
- the motion unit (11) is embodied to axially and rotationally move the worm gear (1), and
- the compensation unit (12) is embodied to move the worm gear (1) independent from the motion unit (11) with a compensating rotary motion and a compensating axial motion.

4. Assembly device (10) according to claim 3, **characterized in that** in a position of the worm gear (1) at which it can engage the teeth of the worm (2), particularly a position reached via the processing step c), the compensation unit (12) is embodied to execute the compensating rotary motion and the compensating axial motion for a complete engagement of the worm gear (1) with the worm (2).

5. Assembly device (10) according to claim 3 or 4, **characterized in that** the compensation unit (12) comprises a grasping module (16) with grasping digits (16.1) for receiving the worm gear (1).

6. Assembly device (10) according to any one of claims 3 to 5, **characterized in that** the compensation unit (12) comprises a bolted flange (13) for a torque-proof connection to the motion unit (11).

7. Assembly device (10) according to any one of claims 3 to 6, **characterized in that** the worm gear is placed by a first helically geared sprocket, particularly a first helically geared spur, and the worm by a second helically geared sprocket, particularly a second helically geared spur gear.

## Revendications

1. Procédé d'assemblage d'une première roue dentée à denture oblique, en particulier d'une roue à denture hélicoïdale (1) et d'une seconde roue dentée montée sur un axe (2.1), en particulier une vis sans fin (2) pour obtenir un engrenage, en particulier un engrenage à vis sans fin (3) selon lequel on positionne au moyen d'un dispositif d'assemblage (10) la première roue dentée (1) co-axialement à un axe d'assemblage (1.1) de cette première roue orienté à 90° par rapport à l'axe (2.1),
**caractérisé en ce que** :
a) on déplace au moyen du dispositif d'assemblage (10) la première roue dentée (1) dans une direction d'assemblage axiale (R) jusqu'à ce qu'elle vienne en appui contre la seconde roue dentée (2),
b) en cas d'absence d'engrenage entre la première roue dentée (1) et la seconde roue dentée (2) on relève la première roue dentée (1) de la seconde roue dentée (2), au moyen du dispositif d'assemblage (10) dans la direction opposée à la direction d'assemblage (R) et on fait tourner la première roue dentée (1) d'un angle de rotation prédéfini autour de son axe propre,
c) on répète les étapes de procédé a) et b) jusqu'à ce que les dents de la première roue dentée (1) puissent engrener avec les dents de la seconde roue dentée (2), et
d) au moyen du dispositif d'assemblage (10), on engrène totalement la première roue dentée (1) avec la seconde roue dentée (2) en effectuant un mouvement d'équilibrage axial dans la direction d'assemblage (R) et un mouvement de rotation d'équilibrage obtenu par la denture oblique de la première roue dentée (1).

2. Procédé conforme à la revendication 1,
**caractérisé en ce que**
l'angle de rotation prédéfini dans l'étape b) est inférieur à la valeur angulaire correspondant à la valeur d'arc du pas de la première roue dentée (1).

3. Dispositif d'assemblage (10) pour permettre d'assembler une roue à denture hélicoïdale, oblique (1) et une vis sans fin (2) montée sur un axe de vis sans fin (2.1) pour obtenir un engrenage à vis sans fin, la roue à denture hélicoïdale (1) étant positionnée co-axialement à un axe d'assemblage (1.1) de cette roue à denture hélicoïdale (1) orienté à 90° par rapport à l'axe de la vis sans fin (2.1) au moyen du dispositif d'assemblage (10) en particulier pour permettre la mise en oeuvre du procédé selon l'une des revendications précédentes, dans lequel :
- le dispositif d'assemblage (10) comprend une unité de déplacement (11) et une unité d'équilibrage (12),
- l'unité d'équilibrage (12) est reliée solidairement en rotation à l'unité de déplacement (11),
- l'unité de déplacement (11) est réalisée pour déplacer la roue à denture hélicoïdale (1) axialement et en rotation, et
- l'unité d'équilibrage (12) est réalisée pour déplacer la roue à denture hélicoïdale (1) indépendamment de l'unité de déplacement (11) avec un mouvement de rotation d'équilibrage et un mouvement d'équilibrage axial.

4. Dispositif d'assemblage (10) conforme à la revendication 3,
**caractérisé en ce que**
dans une position dans laquelle les dents de la roue à denture hélicoïdale (1) peuvent engrener avec les dents de la vis sans fin (2), en particulier la position atteinte à l'issue de l'étape de procédé (c), l'unité d'équilibrage (12) est réalisée pour effectuer le mouvement de rotation d'équilibrage et le mouvement d'équilibrage axial de façon à obtenir un engrènement total de la roue à denture hélicoïdale (1) avec la vis sans fin (2).

5. Dispositif d'assemblage (10) conforme à la revendication 3 ou 4,
**caractérisé en ce que**
l'unité d'équilibrage (12) renferme un module de préhension (16) avec un doigt de préhension (16.1) pour permettre la réception de la roue à denture hélicoïdale (1).

6. Dispositif d'assemblage (10) conforme à l'une des revendications 3 à 5,
**caractérisé en ce que**
l'unité d'équilibrage (12) comprend un bride de vissage (13) pour permettre sa liaison solidaire en rotation avec l'unité de déplacement (11).

7. Dispositif d'assemblage (10) conforme à l'une des revendications 3 à 6,
**caractérisé en ce que**
la roue à denture hélicoïdale est positionnée par une première roue dentée à denture oblique, en particulier une première roue droite oblique et la vis sans fin est positionnée par une seconde roue dentée à denture oblique en particulier une seconde roue droite oblique.
